(19) Europäisches Patentamt
European Patent Office
Office européen des brevets

(11) **EP 3 832 345 A1**

(12) **EUROPEAN PATENT APPLICATION**

(43) Date of publication:
09.06.2021 Bulletin 2021/23

(51) Int Cl.:
*G01S 7/486* (2020.01)       *G01S 7/4861* (2020.01)

(21) Application number: 19214114.1

(22) Date of filing: 06.12.2019

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(71) Applicant: **Integrated Device Technology, Inc.**
**San Jose CA 95138 (US)**

(72) Inventors:
• **GRUBER, Dominik**
**80997 München (DE)**

• **TAVANO, Giuseppe**
**80992 München (DE)**
• **GREITSCHUS, Norbert**
**79346 Endingen (DE)**
• **SCHIAPPELLI, Fulvio**
**81479 München (DE)**

(74) Representative: **Lippert Stachow Patentanwälte**
**Rechtsanwälte**
**Partnerschaft mbB**
**Krenkelstraße 3**
**01309 Dresden (DE)**

(54) **OPTICAL RECEIVER SYSTEM AND METHOD FOR OPERATING AN OPTICAL RECEIVER SYSTEM, PARTICULARLY OF A LIGHT DETECTION AND RANGING SYSTEM**

(57)    The invention relates to an optical receiver system (1), particularly of a light detection and ranging system, comprising:
an input (2) for a signal of an optical receiver (3),
an amplifier (4) for amplifying the signal of the optical receiver (3) at the input (2),
an analog-to-digital converter (6) for converting the amplified signal of the optical receiver (3) from the analog domain to the digital domain,
which is characterized in that
the optical receiver system (1) further comprises a nonlinear filter (4) between the input (2) for the signal of the optical receiver (3) and the amplifier (5) for amplifying the signal of the optical receiver (3) at the input (2).

The invention further relates to a method for operating an optical receiver (1), particularly of a light detection and ranging system.

Fig. 1

**Description**

The invention relates to an optical receiver system, particularly for a light detection and ranging system. The invention further relates to a method for operating an optical receiver system, particularly of a light detection and ranging system.

Optical receiver systems are for example used in light detection and ranging (Lidar) systems, also called laser detection and ranging (Ladar) systems. Such systems measure the distance to a target by illuminating the target with pulsed laser light and measuring the reflected pulses with an optical sensor. Differences in laser return times and wavelength can then be used to make 3-D representations of the target. Lidar systems have become popular in automotive applications, for example in advanced safety systems. A lidar systems is for example used to scan the surroundings of a car to detect any obstacles on a collision course with the car and issue a warning to the driver and/or to initiate an emergency brake. Lidar systems are often used in autonomous cars for controlling and navigation purposes. In such automotive applications it is essential that the Lidar systems is highly available and precise with a minimum of detection errors.

The optical receiver system usually comprises or is connected to a string of optical receivers, which are for example arranged in the front part of an automobile. For example, the optical receiver system is arranged inside the automobile and connected to the string of optical receivers via a cable. The optical receiver system comprises at least one optical receiver channel, which is connectable to a respective optical receiver. Usually the optical receiver system comprises a separate optical receiver channel for each optical receiver.

The optical receiver system amplifies the signal of the optical receiver before processing the optical receiver signal. The amplified optical receiver signal is usually converted from the analog domain to the digital domain by an analog-to-digital converter and afterwards being processed by a digital signal processor. Therefore, each optical receiver channel comprises a separate amplifier system for amplifying the respective optical receiver signals.

High performance Lidar systems, as used in autonomous cars for controlling and navigation purposes, require a wide dynamic range in the receive signal path because the expansion of the light sent out to the target is damped more and more for far objects ($1/r^2$). Furthermore, the reflectivity of the object and/or the light scattered from the object can vary in a wide range. Another factor for the received signal strength is the sensitivity of the photo detector used in the optical receiver. The dynamic range in the receive signal path is an important feature of the optical receiver system of the Lidar system because if the gain of the amplifier is too low strong signals can be detected but weak signals cannot be detected properly. If the gain of the amplifier is to high strong signals cannot be detected properly but weak signals can be detected properly. Detecting signals with different strength is difficult in a single measurement. Even applying an automatic gain control to the amplifier, which dynamically adjust the gain of the amplifier depending on the strength of the received signal, is not a solution if strong and weak signals have to be detected at the same time.

Increasing the dynamic range of the optical receiver system is a possible solution, but this drastically increases the system costs.

It is therefore an object of the present invention to provide an optical receiver system, particularly of a light detection and ranging system, that provides a wide dynamic range with minimum system costs.

The object is solved by an optical receiver system, particularly of a light detection and ranging system, comprising:

an input for a signal of an optical receiver,

an amplifier for amplifying the signal of the optical receiver at the input,

an analog-to-digital converter for converting the amplified signal of the optical receiver from the analog domain to the digital domain,

characterized in that

the optical receiver system further comprises a non-linear filter between the input for the signal of the optical receiver and the amplifier for amplifying the signal of the optical receiver at the input.

According to the invention the analog signal of the optical receiver is passed through a non-linear filter before amplifying. The characteristics of the non-linear filter reduces the dynamic range of the signal of the optical receiver while the information required in the following signal processing is kept. In a Lidar system the required information refers to time of flight, intensity of received light, object detection, object distance, object speed, object reflectivity, environment conditions. Such a non-linear filter is easy to implement and has minimal system costs, like die area, power consumption or hardware costs.

The amplifier is preferably linear.

In a preferred variant of the invention the non-linear filter has a logarithmic or root characteristic. These characteristics are particularly suitable for reducing the dynamic range of the signal of the optical receiver while keeping the required information, e.g. for time of flight, intensity of received light, object detection, object distance, object speed, object reflectivity, environment conditions.

According to a variant of the invention the non-linear filter is implemented by hardware or software, particularly by digital processing. A hardware implemented filter improves the performance but requires additional die area, while a software implemented filter usually has less performance but does not require additional die area. A software implemented filter based on digital processing has a good performance while keeping the advantage regarding the required die area.

Pursuant to a variant of the invention the optical receiver system further comprises a digital data processing unit for processing the signals of the analog-to-digital converter. Thus, the digital signal at the output of the analog-to-digital converter is processed by the digital data processing unit. The digital data processing unit for example performs the extraction of time of flight, intensity of received light, object detection, object distance, object speed, object reflectivity, environment conditions.

In a preferred variant of the invention the digital processing unit implements an inverse non-linear transfer function with matched characteristics to the non-linear filter. Thus, after the digital processing the processed signal has the same dynamic range as the signal of the optical receiver without a loss of information required for time of flight, intensity of received light, object detection, object distance, object speed, object reflectivity, environment conditions of a light detection and ranging system.

According to a further variant of the invention the optical receiver system further comprises at least one additional amplifier between the input for the signal of the optical receiver and the non-linear filter. It is common that optical receiver system for light detection and ranging systems comprise multiple amplifiers. The non-linear filter can be placed somewhere in such a chain of amplifiers, if the strongest received signal of the optical receiver is not saturated by an amplifier prior to be processed by the non-linear filter. For example, the non-linear filter is located between a first amplifier connected to the input for the signal of the optical receiver and a second amplifier located before the analog-to-digital converter.

The non-linear filter can be for example a square root filter with a transfer function $f(x) = \sqrt{x}$, a logarithmic filter with a transfer function of e.g. $f(x) = \ln(1,8*x)$, or a picewise filter with a transfer function of e.g. $f(x) = x$ *for* $x < 1$ *and* $f(x) = 1 + \frac{(x-1)}{4}$. Other non-linear filter with different or similar transfer function can also be used for the optical receiver system of the invention.

According to the invention the object is further solved by a method for operating an optical receiver system, particularly of a light detection and ranging system, comprising the steps of:

receiving a signal of an optical receiver,

applying a non-linear transfer function to the received signal of the optical receiver,

amplifying the non-linearly transferred signal, and

converting the amplified signal from the analog domain to the digital domain.

According to the invention a non-linear transfer function is applied to the analog signal of the optical receiver. The characteristics of the non-linear transfer function reduces the dynamic range of the signal of the optical receiver while the information required in the following signal processing is kept. In a Lidar system the required information refers to time of flight, intensity of received light, object detection, object distance, object speed, object reflectivity, environment conditions. Such a non-linear transfer function is easy to implement and has minimal system costs, like die area, power consumption or hardware costs.

The amplifying is preferably linear.

In a preferred variant of the invention the linear transfer function is logarithmic or root. Such logarithmic or root transfer function reduce the dynamic range while keeping the required information for time of flight, intensity of received light, object detection, object distance, object speed, object reflectivity, environment conditions in a light detection and ranging system.

Pursuant to a variant of the invention the non-linear transfer function is performed by hardware or software, particularly by digital processing. A non-linear transfer function performed by hardware improves the performance but requires additional die area, while a non-linear transfer function performed by software usually has less performance but does not require additional die area. A software performed non-linear transfer function based on digital processing has a good performance while keeping the advantage regarding the required die area.

According to another variant of the invention the method comprises the further step of digitally processing the converted signal. The extraction of time of flight, intensity of received light, object detection, object distance, object speed, object reflectivity, environment conditions of the light detection and ranging system can be performed by the digitally processing of the converted signal.

In a further preferred variant of the invention the digital processing performs an inverse non-linearly transfer function with matched characteristics to the non-linearly transfer function applied to the received signal of the optical receiver. Thus, after the digital processing the processed signal has the same dynamic range as the signal of the optical receiver without a loss of information required for time of flight, intensity of received light, object detection, object distance, object speed, object reflectivity, environment conditions of a light detection and ranging system.

Pursuant to a variant of the invention the method comprises the further step of amplifying the received signal of the optical receiver before applying the non-linear transfer function. Optical receiver system of light detection and ranging systems can comprise multiple amplifiers for amplifying the signal of the optical receiver. The non-linear transfer can be applied somewhere in such a chain of amplifiers, if the strongest received signal of the optical receiver is not saturated by an amplifier prior to applying the non-linear transfer function. For example, the signal of the optical receiver can be amplified by a first amplifier, applied to the non-linear transfer function and afterwards again amplified by a second amplifier. All of the amplifying is preferably linear

In the following the invention will be further explained with respect to the embodiments shown in the figures. It shows:

Fig. 1 a block diagram of a first embodiment of an optical receiver system according to the invention, and

Fig. 2 a block diagram of a second embodiment of an optical receiver system according to the invention.

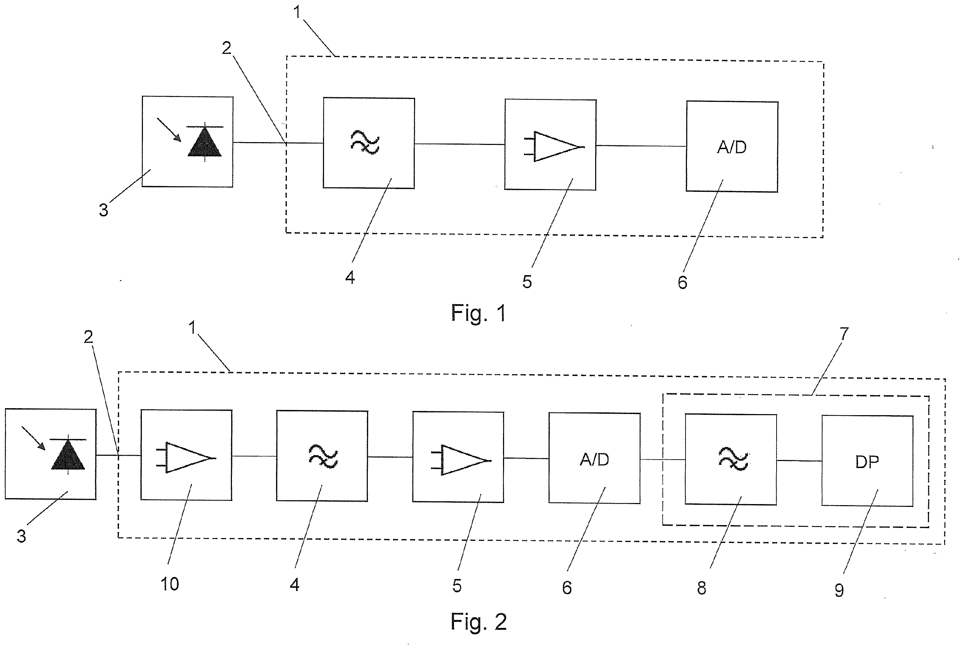

Fig. 1 shows a block diagram of a first embodiment of an optical receiver system 1, particularly of a light detection and ranging system, according to the invention. The optical receiver system 1 comprises an input 2 for a signal of an optical receiver 3. Alternatively, the optical receiver 3 can be integrated into the optical receiver system 1.

The optical receiver system 1 further comprises a non-linear filter 4 connected to the input 2 for the signal of the optical receiver 3. The non-linear filter 4 is connected to an amplifier 5 of the optical receiver system 1, for amplifying the signal of the optical receiver 3.

The optical receiver system 1 further comprises an analog-to-digital converter 6 for converting the amplified signal of the optical receiver 3 from the analog domain to the digital domain.

Preferably, the non-linear filter 4 has a logarithmic or root characteristic. The non-linear filter 4 can be implemented in hardware or software, particularly by digital processing.

In operation, the optical receiver 3 receives a light signal, particularly a reflected and/or scattered light signal sent out from a light detection and ranging system. The optical receiver 3 generates an analog signal representing the received light signal. The generated analog signal is forwarded to the input 2 of the optical receiver system 1.

The optical receiver system 1 applies a non-linear transfer function to the received signal of the optical receiver 3. The non-linear transfer function is implemented by the non-linear filter 4.

The non-linearly transferred signal is amplified by amplifier 5 of the optical receiver system 1. Finally, the amplified signal is converted from the analog domain to the digital domain by analog-to-digital converter 6 of the optical receiver system 1. The digital signal can afterwards be further processed by the light detection ranging system, e.g. for time of flight, intensity of received light, object detection, object distance, object speed, object reflectivity, environment conditions.

Fig. 2 shows a block diagram of a second embodiment of an optical receiver system 1, particularly of a light detection and ranging system, according to the invention. The second embodiment of Fig. 2 differs from the first embodiment of Fig. 1 in that the optical receiver system 1 further comprises a digital data processing unit 7 for processing the signals of the analog-to-digital converter 6.

The digital data processing unit 7 of Fig. 2 implements an inverse non-linearly transfer function 8 with matched characteristics to the non-linear filter 4. The digital data processing unit 7 further implements the data processing 9, particularly for extracting time of flight, intensity of received light, object detection, object distance, object speed, object reflectivity, environment conditions of a light detection and ranging system. The results of the data processing 9 can be forwarded to other systems of an autonomous car for warning the driver and/or initiating other functions like an emergency brake. Thus, the optical receiver system 1 of Fig. 2 represents the receiving part of a light detection and ranging system.

The optical receiver system 1 of Fig. 2 further comprises an additional amplifier 10 between the input 2 of the optical receiver system 1 and the non-linear filter 4. This additional amplifier 10 amplifies the signals of the optical receiver 3 before the non-linear transfer of the signal. The additional amplifier 10 is designed such that the signal of the optical receiver 3 does not saturate by the additional amplifier 10.

## List of reference numerals

1    optical receiver system
2    input
3    optical receiver
4    non-linear filter
5    amplifier
6    analog-to-digital converter
7    digital data processing unit
8    inverse non-linear transfer function
9    data processing
10   additional amplifier

## Claims

1. Optical receiver system (1), particularly of a light detection and ranging system, comprising:

   an input (2) for a signal of an optical receiver (3),
   an amplifier (4) for amplifying the signal of the optical receiver (3) at the input (2),

an analog-to-digital converter (6) for converting the amplified signal of the optical receiver (3) from the analog domain to the digital domain, **characterized in that**
the optical receiver system (1) further comprises a non-linear filter (4) between the input (2) for the signal of the optical receiver (3) and the amplifier (5) for amplifying the signal of the optical receiver (3) at the input (2).

2. Optical receiver system (1) according to claim 1, wherein the non-linear filter (4) has a logarithmic or root characteristic.

3. Optical receiver system (1) according to claim 1 or claim 2,
wherein the non-linear filter (4) is implemented by hardware or software, particularly by digital processing.

4. Optical receiver system (1) according to any of claims 1 to 3,
further comprising a digital data processing unit (7) for processing the signals of the analog-to-digital converter (6).

5. Optical receiver system (1) according to claim 4, wherein the digital data processing unit (7) implements an inverse non-linear transfer function (8) with matched characteristics to the non-linear filter (4).

6. Optical receiver system (1) according to any of claims 1 to 5,
further comprising at least one additional amplifier (10) between the input (2) for the signal of the optical receiver (3) and the non-linear filter (4).

7. Method for operating an optical receiver (1), particularly of a light detection and ranging system, comprising the steps of:

receiving a signal of an optical receiver (3), applying a non-linear transfer function to the received signal of the optical receiver (3), amplifying the non-linearly transferred signal, and
converting the amplified signal from the analog domain to the digital domain.

8. Method according to claim 7,
wherein the non-linear transfer function is logarithmic or root.

9. Method according to claim 7 or claim 8:
Wherein the non-linear transfer function is performed by hardware or software, particularly by digital processing.

10. Method according to any of claims 7 to 9, further comprising the step of digitally processing the converted signal.

11. Method according to claim 10,
wherein the digital processing performs an inverse non-linearly transfer function (8) with matched characteristics to the non-linearly transfer function applied to the received signal of the optical receiver (3).

12. Method according to any of claims 7 to 11, further comprising the step of amplifying the received signal of the optical receiver before applying the non-linear transfer function.

Fig. 1

Fig. 2

EP 3 832 345 A1

Europäisches
Patentamt

European
Patent Office

Office européen
des brevets

# EUROPEAN SEARCH REPORT

Application Number

EP 19 21 4114

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 953 109 A (LAI YI-REN [TW] ET AL) 14 September 1999 (1999-09-14) | 1-4,7-10 | INV.<br>G01S7/486 |
| Y | * column 3, lines 16-65; figures 1,3 * | 5,6,11,12 | G01S7/4861 |
| Y | US 4 717 252 A (HALLDORSSON THORSTEINN [DE] ET AL) 5 January 1988 (1988-01-05) | 5,11 | |
| A | * figure 3 * | 1,7 | |
| Y | EP 0 494 027 A1 (RENAULT [FR]) 8 July 1992 (1992-07-08) | 6,12 | |
| A | * figure 5 * | 1,7 | |

TECHNICAL FIELDS
SEARCHED      (IPC)

G01S

The present search report has been drawn up for all claims

| Place of search | Date of completion of the search | Examiner |
|---|---|---|
| Munich | 8 May 2020 | Kern, Olivier |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 21 4114

This annex lists the patent family members relating to the patent documents cited in the above-mentioned European search report.
The members are as contained in the European Patent Office EDP file on
The European Patent Office is in no way liable for these particulars which are merely given for the purpose of information.

08-05-2020

| Patent document cited in search report | | Publication date | Patent family member(s) | | Publication date |
|---|---|---|---|---|---|
| US 5953109 | A | 14-09-1999 | DE | 19757835 A1 | 01-07-1999 |
| | | | US | 5953109 A | 14-09-1999 |
| US 4717252 | A | 05-01-1988 | DE | 3425098 A1 | 16-01-1986 |
| | | | FR | 2567274 A1 | 10-01-1986 |
| | | | GB | 2161340 A | 08-01-1986 |
| | | | SE | 457668 B | 16-01-1989 |
| | | | US | 4717252 A | 05-01-1988 |
| EP 0494027 | A1 | 08-07-1992 | EP | 0494027 A1 | 08-07-1992 |
| | | | FR | 2671408 A1 | 10-07-1992 |

EPO FORM P0459

For more details about this annex : see Official Journal of the European Patent Office, No. 12/82